# EUROPEAN PATENT SPECIFICATION

(11) **EP 3 556 613 B1**
(45) Date of publication and mention of the grant of the patent: **10.03.2021**
(21) Application number: 18305477.4
(22) Date of filing: 18.04.2018
(51) Int. Cl.: B60R 21/11, B62D 33/06, B62D 25/06, E02F 9/16

(54) **STRUCTURE FOR ATTACHING ROOF GUARD FRO CONSTRUCTION MACHINE**
STRUKTUR ZUR BEFESTIGUNG EINES DACHSCHUTZES FÜR EINE BAUMASCHINE
STRUCTURE POUR FIXER UNE PROTECTION DE TOIT POUR UNE MACHINE DE CONSTRUCTION

(43) Date of publication of application: 23.10.2019
(73) Proprietor: Yanmar Power Technology Co., Ltd., Osaka City (JP)
(72) Inventor: MERCEY, Jean-Christophe, 52100 SAINT DIZIER (FR); BETTON, Richard, 52100 SAINT DIZIER (FR); MIYANISHI, Masami, 52100 SAINT DIZIER (FR)
(74) Representative: Poindron, Cyrille

(56) References cited:
- EP-A1- 1 728 689
- KR-A- 20150 057 609
- US-A- 3 731 967

## Description

### Technical Field

The present invention relates to a structure for attaching a roof guard that protects a ceiling of a cabin of a construction machine.

### Background Art

Patent Literature 1 (PTL 1) discloses a technique for attaching, above a cab (110), a top guide (150) that protects the cab from an object falling from above. Specifically, according to this technique, bosses (118) protruding from ceiling brackets (116) disposed in an upper portion of the cab are penetrated through holes of top brackets (156) disposed at both ends of the top guide.

### Citation List

### Patent Literature

Patent Literature 1: Specification of European Patent No. 1728689
Patent Literature 2: US 3 731 967

### Summary of Invention

### Technical Problem

PTL 1 discloses a protective structure for a construction machine according to the preamble of claim 1. Unfortunately, since the technique disclosed in the specification of PTL 1 provides a structure in which the top guide is fixed by the bosses protruding from the upper portion of the cab, a situation as below may occur. That is, if an object falls onto the top guide from above, portions of the top guide and the cab in the vicinity of the bosses may be broken by the impact of the falling object. This may require replacement of not only the top guide but also the cab.

In order to deal with this problem, some aspects of the present invention have an object to provide a structure for attaching a roof guard, the structure being capable of appropriately preventing a cabin from being broken by an object falling from above.

### Solution to Problem

The problem is solved by the subject matter of claim 1. Some preferred embodiments are claimed in dependent claims.

A structure according to an aspect of the present disclosure for attaching a roof guard that protects a ceiling of a cabin of a construction machine includes: a first bracket protruding laterally from an outer periphery of an upper end of the cabin; a first protruding piece and a second protruding piece protruding laterally from an outer periphery of the roof guard; and a second bracket horizontally interposed between the first protruding piece and the second protruding piece, the second bracket having a joined part to be joined to an upper end of the first bracket.

According to the aspect of the present invention, a joined part between the roof guard and the cabin is not on a top surface of the cabin. Consequently, even in a case where the roof guard is broken by an object falling from above, breakage of the cabin can be minimized.

The aspect of the present invention may be configured such that the second bracket is fixed to the first protruding piece and the second protruding piece.

The aspect of the present invention may be configured such that the second bracket includes a first support and a second support extending upward from both ends in a horizontal direction of the joined part, and the first support and the second support are respectively fixed to the first protruding piece and the second protruding piece by a pin.

With such a configuration, an impact force of the falling object can be absorbed by deformation of the second bracket. Consequently, it is possible to suppress or reduce deformation of other parts.

The aspect of the present invention may be configured such that the first support has a through-hole through which the pin is to be penetrated and below which a first slit is provided, and the second support has a through-hole through which the pin is to be penetrated and below which a second slit is provided.

In a case where an impact energy of the falling object exceeds a threshold, the impact force can be absorbed by the pin breaking through boundaries between the through-holes and the slits. Furthermore, the impact force that is to be absorbed can be adjusted by distances between the through-holes and the slits.

### Brief Description of Drawings

[FIG. 1] A side view of a construction machine.
[FIG. 2] A plan view of the construction machine.
[FIG. 3] A perspective view of a roof guard.

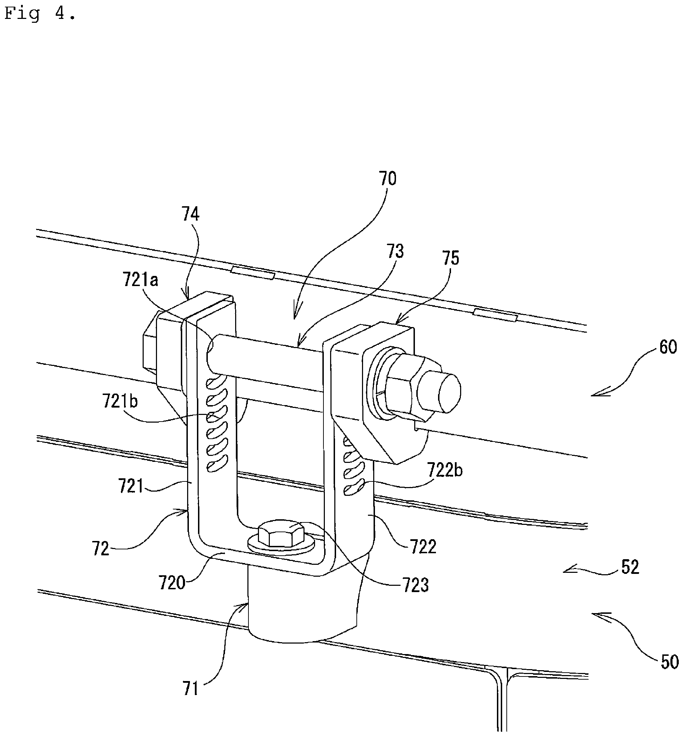

[FIG. 4] An enlarged perspective view of an attaching part.
[FIG. 5] A side view illustrating a bucket cylinder and a cylinder cover.
[FIG. 6] An exploded perspective view of the cylinder cover.

### Description of Embodiments

With reference to the drawings, embodiments of the present invention will be described.

### [Structure of construction machine]

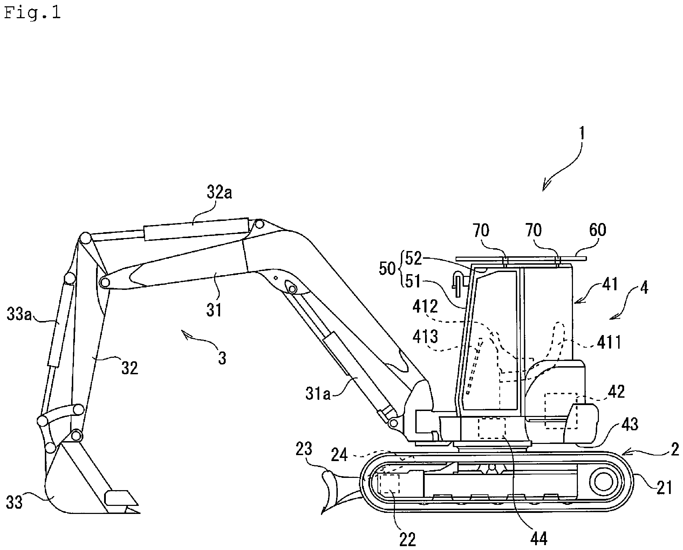

First, with reference to FIG. 1, the following will describe a schematic configuration of an excavator 1 that is one example of the construction machine. The construction machine is not limited to the excavator 1, but may be another type of vehicle such as a wheel loader. The excavator 1 includes a base carrier 2, a work machine 3, and a revolving upper body 4.

The base carrier 2 is driven by a driving force from an engine 42, and causes the excavator 1 to run. The base carrier 2 is provided with a pair of left and right crawlers 21 and a pair of left and right running motors 22. The left and right running motors 22, which are hydraulic motors, respectively drive the left and right crawlers 21 to allow the excavator 1 to move forward or backward. In addition, the base carrier 2 is provided with a blade 23 and a blade cylinder 24, which is a hydraulic actuator for turning the blade 23 in a top-and-bottom direction.

The work machine 3 is driven by a driving force from the engine 42, and performs an excavation work on, e.g., earth and sand. The work machine 3 includes a boom 31, an arm 32, and a bucket 33. The work machine 3 independently drive the boom 31, the arm 32, and the bucket 33 to perform the excavation work.

The boom 31 has a proximal end supported by a front portion of the revolving upper body 4, and is turned by a boom cylinder 31a, which is capable of expansion and contraction. The arm 32 has a proximal end supported by a distal end of the boom 31, and is turned by an arm cylinder 32a, which is capable of expansion and contraction. The bucket 33 has a proximal end supported by a distal end of the arm 32, and is turned by a bucket cylinder 33a, which is capable of expansion and contraction.

The revolving upper body 4 is configured to be capable of revolving relative to the base carrier 2 via a revolving bearing (not illustrated). In the revolving upper body 4, a control section 41, the engine 42, a revolving base 43, a revolving motor 44, and the like are disposed. The revolving upper body 4 is caused to revolve via the revolving bearing (not illustrated) by a driving force from the driving motor 44, which is a hydraulic motor. In the revolving upper body 4, a plurality of hydraulic pumps (not illustrated in FIG. 1) driven by the engine 42 is disposed. These hydraulic pumps supply operating oil to the boom cylinder 31a, the arm cylinder 32a, the bucket cylinder 33a, and the like.

In the control section 41, a control seat 411 is disposed. On the left and right of the control seat 411, a pair of work operation levers 412 is disposed. In front of the control seat 411, a pair of traveling levers 413 is disposed. While sitting on the control seat 411, the operator can operate devices such as the work operation levers 412 and the traveling levers 413 to control the engine 42, the hydraulic motors, the hydraulic actuators, and the like to cause the excavator 1 to run, to make a turn, to perform a work, and/or the like.

The control seat 411, the work operation levers 412, the traveling levers 413, and the like are disposed on a left portion of the revolving base 43, and are covered with a cabin 50. The cabin 50 includes a cabin frame 51 and a roof 52.

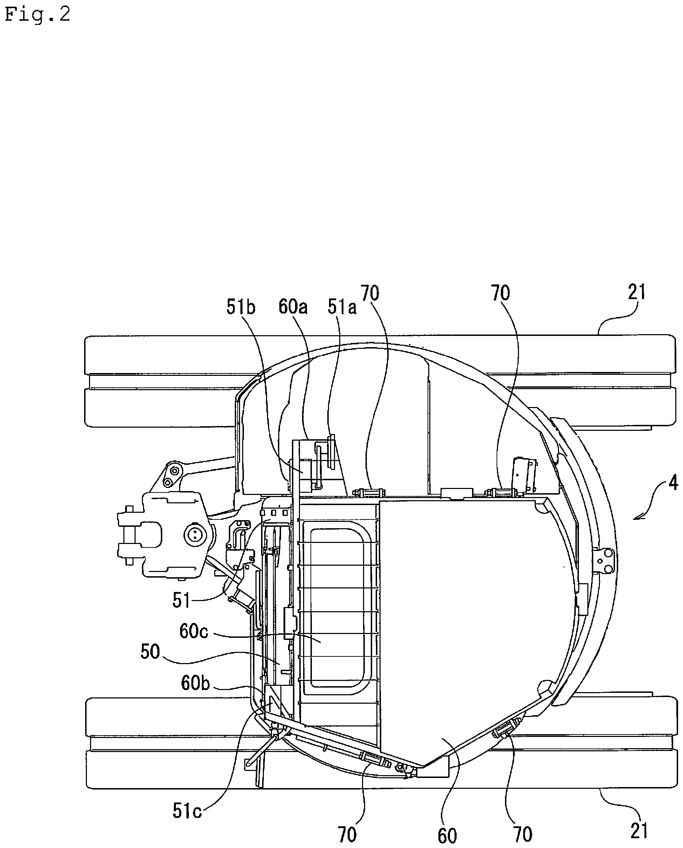

The cabin frame 51 is disposed in the left portion of the revolving base 43 so that the cabin frame 51 is adjacent to a bonnet disposed in a right portion of the revolving base 43. As illustrated in FIG. 2, the control section 41 is surrounded by a frame, and has a substantially pentagonal shape in a plan view. The cabin frame 51 is provided with a front glass panel, a rear glass panel, a left panel, a left glass panel, a right panel, a right glass panel, and a door. The roof 52 is provided above the cabin frame 51.

A roof guard 60 is attached above the cabin 50, more specifically, above the roof 52. The roof guard 60 prevents the cabin 50 from being broken by an object falling from above. The roof guard 60 covers the roof 52, and has a substantially pentagonal shape in a plan view. As illustrated in FIG. 2, the roof guard 60 may be provided with a right guard 60a protruding rightward for protecting a mirror 51a and a right headlamp 51b, which are disposed in a front right portion of the cabin frame 51. In addition, the roof guard 60 may be provided with a left guard 60b protruding forward for protecting a left headlamp 51c, which is disposed in a front left portion of the cabin frame 51. Furthermore, the roof guard 60 has a front portion having a plurality of slits 60c extending in a front-and-rear direction. This allows light collection through a skylight window, if provided, in a front portion of the roof 52.

The roof guard 60 is attached to the cabin 50 via attaching parts 70. Two attaching parts 70 are disposed in each of the left and right sides. The attaching parts 70 each include a first bracket 71 on the cabin 50 side, a second bracket 72 on the roof guard 60 side, a pin 73, a first protruding piece 74, and a second protruding piece 75.

The first bracket 71 protrudes laterally from the outer periphery of the roof 52. In the present embodiment, two first brackets 71 are disposed in each of the left and right sides of the roof 52. The first brackets 71 are welded to the roof 52. The first brackets 71 each have an upper end having a flat surface with a bolt hole.

The second brackets 72 are each made of an elongated rectangular plate that is bent to have a substantially U-shape in a front view of the second bracket 72. The second brackets 72 each include a joined part 720 as well as a first support 721 and a second support 722. The joined part 720 is to be joined to an upper end of a corresponding one of the first brackets 71. The first support 721 and the second support 722 extend upward from both ends in a horizontal direction of the joined part 720.

The joined part 720 has a center portion having a through-hole. A bolt 723 is inserted through the through-hole, and is tightened to the bolt hole of the first bracket 71, so that the second bracket 72 is fixed to the first bracket 71.

The first support 721 has an upper end having a through-hole 721a through which the pin 73 is to be penetrated. In addition, first slits 721b are provided below the through-hole 721a of the first support 721. The first slits 721b each have a circular arc shape. The plurality of first slits 721b is arranged in the top-and-bottom direction.

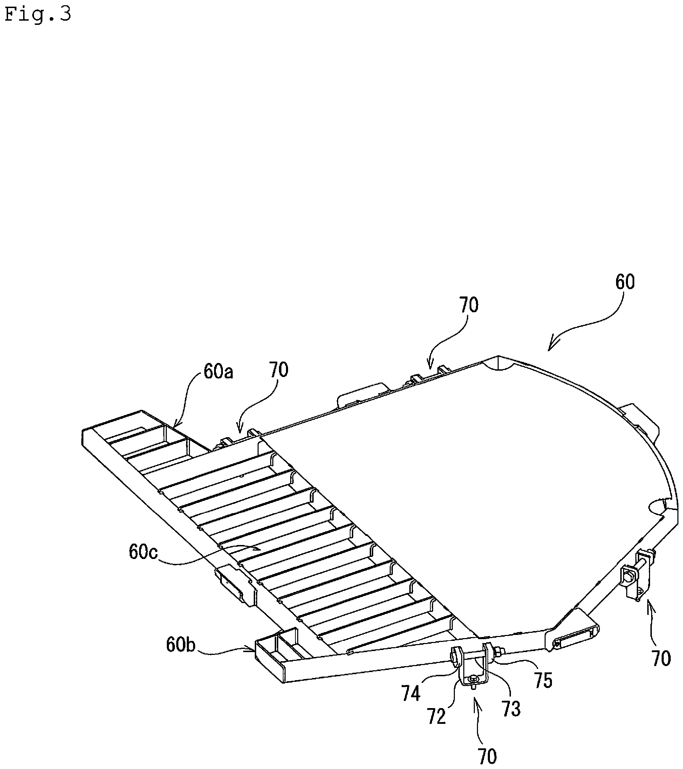

The second support 722 has a similar shape to that of the first support 721. The second support 722 has an upper end having a through-hole (not illustrated in FIG. 3) through which the pin 73 is to be penetrated. In addition, second slits 722b are provided below the through-hole of the second support 722. The second slits 722b each have a circular arc shape. The plurality of second slits 722b is arranged in the top-and-bottom direction.

The roof guard 60 has the first protruding pieces 74 and the second protruding pieces 75, each of which protrudes laterally from the outer periphery of the roof guard 60. Each of the first protruding pieces 74 and a corresponding one of the second protruding pieces 75 are disposed at a space from each other in a horizontal direction. The first protruding pieces 74 and the second protruding pieces 75 each have a plate-shape, and are arranged to have thickness directions coinciding with the horizontal direction. The first protruding pieces 74 and the second protruding pieces 75 are welded to the roof guard 60. The first protruding pieces 74 and the second protruding pieces 75 each have a through-hole through which the pin 73 is to be penetrated.

Each of the second brackets 72 is horizontally interposed between a corresponding one of the first protruding pieces 74 and a corresponding one of the second protruding pieces 75. In other words, the second bracket 72 bridges, via its first support 721 and its second support 722, between the first protruding piece 74 and the second protruding piece 75. The first support 721 and the second support 722 of the second bracket 72 are respectively fixed to the first protruding piece 74 and the second protruding piece 75 by the pin 73.

According to the present invention, the attaching parts 70 for the roof guard 60 and the cabin 50 are not disposed on a top surface of the cabin 50. Consequently, even in a case where the roof guard 60 is broken by an object falling from above, breakage of the cabin 50 can be minimized.

Furthermore, an impact force of the falling object can be absorbed by deformation of the joined parts 720 of the second brackets 72. Consequently, it is possible to suppress or reduce deformation of other parts. Moreover, in a case where an impact energy of the falling object exceeds a threshold, the impact force can be absorbed by the pins 73 breaking through boundaries between the through-holes 721a of the first supports 721 and their corresponding first slits 721b and boundaries between the through-holes of the second supports 722 and their corresponding second slits 722b. In a case where a greater impact energy is further applied thereto, the impact force can be absorbed by the pins 73 breaking through boundaries between adjacent ones of the first slits 721b and boundaries between adjacent ones of the second slits 722b. Even in case any of the second brackets 72 is deformed or broken, the second bracket 72 can be replaced with a new one easily.

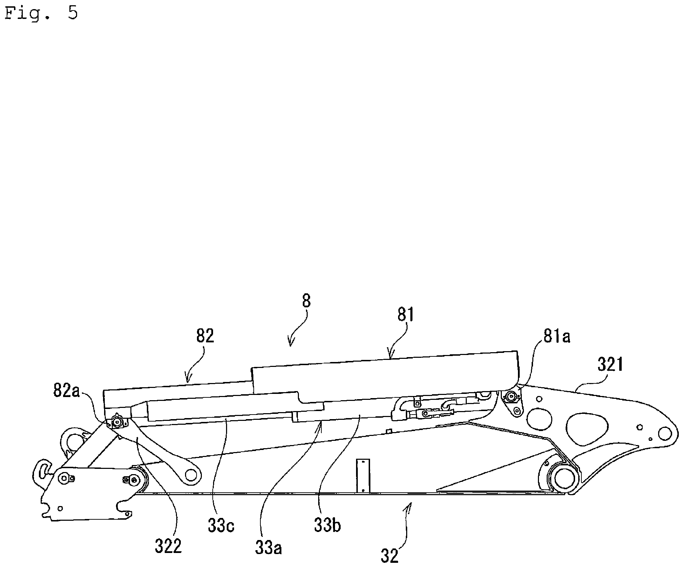

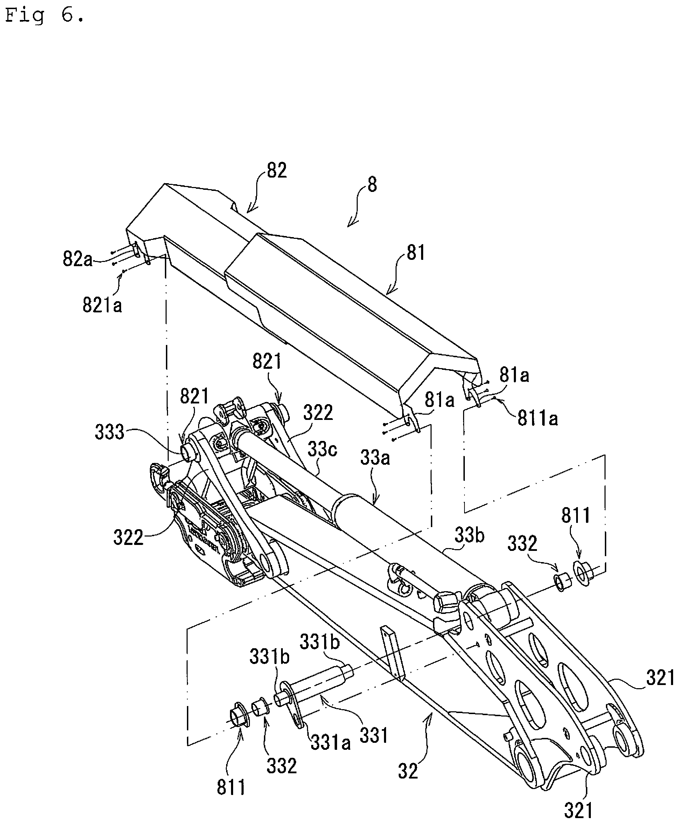

The excavator 1 may include cylinder covers 8 that respectively protect the boom cylinder 31a, the arm cylinder 32a, and the bucket cylinder 33a. The description here deals with the cylinder cover 8 that protects the bucket cylinder 33a. Note that the cylinder covers that protect the boom cylinder 31a and the arm cylinder 32a have similar configurations to that of the cylinder cover 8 that protects the bucket cylinder 33a. FIG. 5 is a side view illustrating the bucket cylinder 33a and the cylinder cover 8. FIG. 6 is an exploded perspective view of the cylinder cover 8.

The cylinder cover 8 includes a first cover 81 and a second cover 82. The first cover 81 mainly protects a cylinder tube 33b of the bucket cylinder 33a. The second cover 82 mainly protects a piston rod 33c of the bucket cylinder 33a. Each of the first cover 81 and the second cover 82 has a chevron cross-sectional shape.

The first cover 81 and the second cover 82 are in slidable contact with each other. A guide rail (not illustrated) is provided on an inner surface of the first cover 81 or on an outer surface of the second cover 82. This allows the cylinder cover 8 to expand and contract following expansion and contraction of the bucket cylinder 33a.

Bolts 811a are fixed to brackets 811 (described later), so that the first cover 81 is attached, via first cover stays 81a, to a portion of the arm 32 closer to the proximal end of the arm 32. The first cover stays 81a may be integrated with the first cover 81, or may be separated from the first cover 81.

The cylinder tube 33b of the bucket cylinder 33a is connected, via a first pin 331, to a pair of arm brackets 321 disposed in the portion of the arm 32 closer to the proximal end of the arm 32. The first pin 331 has a pin rotation stopper 331a welded to the periphery of the first pin 331. The pin rotation stopper 331a is fixed to the arm brackets 321 by a bolt.

The first pin 331 protrudes from the pair of arm brackets 321 in a left-and-right direction. The first pin 331 has protrusions 331b to which the brackets 811 are rotatably attached via bushes 332. To the brackets 811, the first cover stays 81a are fixed by the bolts 811a.

Bolts 821a are fixed to brackets 821 (described later), so that the second cover 82 is attached, via second cover stays 82a, to a portion of the arm 32 closer to the distal end of the arm 32. The second cover stays 82a may be integrated with the second cover 82, or may be separated from the second cover 82.

The piston rod 33c of the bucket cylinder 33a is connected, via a second pin 333, to a pair of links 322 disposed in the portion of the arm 32 closer to the distal end of the arm 32. The pair of links 322 is disposed in the portion of the arm 32 closer to the distal end of the arm 32. Expansion and contraction of the bucket cylinder 33a causes the links 322 to turn relative to the arm 32, which causes the bucket 33 to turn relative to the arm 32. The second pin 333 is fixed to the links 322 via a pin rotation stopper.

The second pin 333 has both ends to which the brackets 821 are rotatably attached via bushes (not illustrated in FIG. 6). To the brackets 821, the second cover stays 82a are fixed by the bolts 821a.

As described above, the cylinder cover 8 is not joined to a cylinder body of the bucket cylinder 33a. Consequently, even in a case where a strong impact is applied to the cylinder cover 8, the impact is not applied to the cylinder body, and thus the bucket cylinder 33a is not broken. This eliminates the need for replacement of the cylinder, which may otherwise be required if the bucket cylinder 33a is broken.

In addition, the cylinder cover 8 has both ends that are rotatably fixed at fulcrums (the first pin 331 and the second pin 333) in the bucket cylinder 33a. Consequently, the cylinder cover 8 entirely covers the bucket cylinder 33a. The cylinder cover 8, therefore, can protect not only the cylinder body but also other related members such as a connector, a tube, and a hose.

Some embodiments of the present invention have been described with reference to the drawings. It however should be considered that specific configurations of the present invention are not limited to these embodiments.

### Reference Signs List

- 1: excavator
- 2: base carrier
- 3: work machine
- 4: revolving upper body
- 50: cabin
- 52: roof
- 60: roof guard
- 70: attaching part
- 71: first bracket
- 72: second bracket
- 720: joined part
- 721: first support
- 721a: through-hole
- 721b: first slit
- 722: second support
- 722b: second slit
- 73: pin
- 74: first protruding piece
- 75: second protruding piece
- 8: cylinder cover

## Claims

1. A protective structure for a construction machine (1), comprising:
a cabin (50) of the construction machine, said cabin having a ceiling;
a roof guard (60) configured to protect the ceiling of the cabin (50), the protective structure being **characterized by**;
a first bracket (71) protruding laterally from an outer periphery of an upper end of the cabin (50);
a first protruding piece (74) and a second protruding piece (75) protruding laterally from an outer periphery of the roof guard (60); and
a second bracket (72) horizontally interposed between the first protruding piece (74) and the second protruding piece (75), the second bracket (72) having a joined part (720) to be joined to an upper end of the first bracket (71).

2. The protective structure according to claim 1, wherein the second bracket (72) is fixed to the first protruding piece (74) and the second protruding piece (75).

3. The protective structure according to claim 1 or 2, wherein
the second bracket (72) includes a first support (721) and a second support (722) extending upward from both ends in a horizontal direction of the joined part (720), and
the first support (721) and the second support (722) are respectively fixed to the first protruding piece (74) and the second protruding piece (75) by a pin (73).

4. The protective structure according to claim 3, wherein
the first support (721) has a through-hole (721a) through which the pin (73) is to be penetrated and below which a first slit (721b) is provided, and
the second support (722) has a through-hole through which the pin (73) is to be penetrated and below which a second slit (722b) is provided.

## Patentansprüche

1. Schutzstruktur für eine Baumaschine (1), umfassend:
eine Kabine (50) der Baumaschine, wobei die Kabine eine Decke aufweist;
einen Dachschutz (60), der so konfiguriert ist, dass er die Decke der Kabine (50) schützt, wobei die Schutzstruktur **gekennzeichnet ist durch**:
eine erste Halterung (71), die seitlich von einem Außenumfang eines oberen Endes der Kabine (50) vorsteht;
ein erstes vorstehendes Stück (74) und ein zweites vorstehendes Stück (75), die seitlich von einem Außenumfang des Dachschutzes (60) vorstehen; und
eine zweite Halterung (72), die horizontal zwischen dem ersten vorstehenden Stück (74) und dem zweiten vorstehenden Stück (75) angeordnet ist, wobei die zweite Halterung (72) ein Verbindungsteil (720) aufweist, das mit einem oberen Ende der ersten Halterung (71) zu verbinden ist.

2. Schutzstruktur nach Anspruch 1, wobei die zweite Halterung (72) an dem ersten vorstehenden Stück (74) und dem zweiten vorstehenden Stück (75) befestigt ist.

3. Schutzstruktur nach Anspruch 1 oder 2, wobei
die zweite Halterung (72) eine erste Stütze (721) und eine zweite Stütze (722) aufweist, die sich von beiden Enden in einer horizontalen Richtung des Verbindungsteils (720) nach oben erstrecken, und
die erste Stütze (721) und die zweite Stütze (722) jeweils durch einen Stift (73) an dem ersten vorstehenden Stück (74) und dem zweiten vorstehenden Stück (75) befestigt sind.

4. Schutzstruktur nach Anspruch 3, wobei
die erste Stütze (721) ein Durchgangsloch (721a) aufweist, durch das der Stift (73) hindurchzuführen ist und unter dem ein erster Schlitz (721b) vorgesehen ist, und
die zweite Stütze (722) ein Durchgangsloch aufweist, durch das der Stift (73) hindurchzuführen ist und unter dem ein zweiter Schlitz (722b) vorgesehen ist.

## Revendications

1. Structure de protection pour une machine de construction (1) comprenant :
une cabine (50) de la machine de construction, ladite cabine ayant un plafond ;
une protection de toit (60) configurée pour protéger le plafond de la cabine (50), la structure de protection étant **caractérisée par** :
une première console (71) faisant saillie latéralement d'une périphérie externe d'une extrémité supérieure de la cabine (50) ;
une première pièce en saillie (74) et une seconde pièce en saillie (75) faisant saillie latéralement d'une périphérie externe de la protection de toit (60) ; et
une seconde console (72) intercalée horizontalement entre la première pièce en saillie (74) et la seconde pièce en saillie (75), la seconde console (72) ayant une partie assemblée (720) à assembler à une extrémité supérieure de la première console (71).

2. Structure de protection selon la revendication 1, dans laquelle la seconde console (72) est fixée à la première pièce en saillie (74) et à la seconde pièce en saillie (75).

3. Structure de protection selon la revendication 1 ou 2, dans laquelle :
la seconde console (72) comprend un premier support (721) et un second support (722) s'étendant vers le haut à partir des deux extrémités dans une direction horizontale de la partie assemblée (720), et
le premier support (721) et le second support (722) sont respectivement fixés sur la première pièce en saillie (74) et la seconde pièce en saillie (75) par une broche (73).

4. Structure de protection selon la revendication 3, dans laquelle :
le premier support (721) a un trou débouchant (721a) à travers lequel la broche (73) doit pénétrer et au-dessous duquel est prévue une première fente (721b), et
le second support (722) a un trou débouchant à travers lequel la broche (73) doit pénétrer et au-dessous duquel est prévue une seconde fente (722b).
